(19) Europäisches Patentamt
European Patent Office
Office européen des brevets

(11) **EP 2 453 760 B1**

(12) **FASCICULE DE BREVET EUROPEEN**

(45) Date de publication et mention
de la délivrance du brevet:
**18.09.2013 Bulletin 2013/38**

(21) Numéro de dépôt: **10742700.7**

(22) Date de dépôt: **08.07.2010**

(51) Int Cl.:
**A23K 1/16** (2006.01)          **A23K 1/18** (2006.01)

(86) Numéro de dépôt international:
**PCT/CH2010/000177**

(87) Numéro de publication internationale:
**WO 2011/006269 (20.01.2011 Gazette 2011/03)**

(54) **ADDITIF ALIMENTAIRE CONTENANT DE L'EUGÉNOL, DU CINNAMALDÉHYDE ET UN EXTRAIT D'ALLIACÉE**

LEBENSMITTELZUSATZ MIT EUGENOL, ZIMTALDEHYD UND EINEM ALLIUMEXTRAKT

FOOD ADDITIVE CONTAINING EUGENOL, CINNAMALDEHYDE AND AN ALLIACEOUS EXTRACT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **13.07.2009 CH 10862009**
**13.07.2009 FR 0903439**

(43) Date de publication de la demande:
**23.05.2012 Bulletin 2012/21**

(73) Titulaire: **Pancosma S.A.**
**1218 Le Grand-Saconnex (CH)**

(72) Inventeurs:
• **BRAVO, David**
**CH-1400 Yverdon-les-Bains (CH)**
• **CALSAMIGLIA, Sergio**
**E-08174 San Cugat del Valles (ES)**

(74) Mandataire: **Moinas & Savoye SA**
**42, rue Plantamour**
**1201 Genève (CH)**

(56) Documents cités:
**WO-A1-03/094628          WO-A1-2004/089108**
**WO-A1-2008/037827       GB-A- 1 465 533**

• **BUSQUET M ET AL: "Effect of garlic oil and four of its compounds on rumen microbial fermentation" JOURNAL OF DAIRY SCIENCE, AMERICAN DAIRY SCIENCE ASSOCIATION, US LNKD- DOI:10.3168/JDS.S0022-0302(05)73126-X, vol. 88, 1 janvier 2005 (2005-01-01), pages 4393-4404, XP002568660 ISSN: 0022-0302**
• **MACHEBOEUF D ET AL: "Dose-response effects of essential oils on in vitro fermentation activity of the rumen microbial population" ANIMAL FEED SCIENCE AND TECHNOLOGY, vol. 145, no. 1-4, août 2008 (2008-08), pages 335-350, XP002575075 ISSN: 0377-8401**
• **CARDOZO P W ET AL: "Effects of alfalfa extract, anise, capsicum, and a mixture of cinnamaldehyde and eugenol on ruminal fermentation and protein degradation in beef heifers fed a high-concentrate diet" JOURNAL OF ANIMAL SCIENCE, vol. 84, no. 10, octobre 2006 (2006-10), pages 2801-2808, XP002608366 ISSN: 0021-8812**
• **BUSQUET M ET AL: "PLANT EXTRACTS AFFECT IN VITRO RUMEN MICROBIAL FERMENTATION" JOURNAL OF DAIRY SCIENCE, AMERICAN DAIRY SCIENCE ASSOCIATION, US LNKD- DOI: 10.3168/JDS.S0022-0302(06)72137-3, vol. 89, no. 2, 1 janvier 2006 (2006-01-01), pages 761-771, XP008063702 ISSN: 0022-0302**

## Description

L'invention concerne un additif alimentaire comprenant de l'eugénol, du cinnamaldéhyde et un extrait d'alliacée dans certaines proportions. Un tel additif peut être ajouté à la nourriture de certains animaux, en particulier les bovins, en vue de réduire leur production de méthane.

## Arrière-plan de l'invention

Il est maintenant bien connu que les animaux d'élevage produisent plus de gaz à effet de serre que les transports.

On considère en particulier que les ruminants sont responsables de 18% des émissions de méthane dont l'effet de serre, d'après les experts du Giec (Groupe Intergouvernemental d'experts sur l'Evolution du Climat), est 23 fois plus puissant que celui du dioxyde de carbone.

Selon des scientifiques argentins, une vache d'environ 550 kg rejette, essentiellement par le biais d'éructations, entre 800 et 1000 litres de gaz par jour, principalement du méthane.

Il s'ensuit que le respect de l'environnement devient une contrainte importante pour l'agriculture et certains états américains envisagent de taxer de plus en plus sévèrement la production de méthane par les vaches laitières.

Diverses tentatives ont déjà été menées pour réduire la production de méthane par les bovins.

On a par exemple déjà employé certains antibiotiques dans l'alimentation. Cette solution tend à être abandonnée, d'une part, parce que ces antibiotiques ont, en sus de leur coût, l'inconvénient d'être la plupart du temps soumis à des autorisations administratives et, d'autre part, parce qu'elle s'éloigne du souhait croissant du consommateur de consommer des produits « naturels », voire issus de l'agriculture biologique.

Plus récemment, la station expérimentale de l'INRA (Institut National pour la Recherche Agronomique) a montré, dans différents essais menés sur des vaches laitières, qu'un apport de 6% de lipides issus de la graine de lin diminue la production de méthane de ces animaux de 27 à 37%.

Cf. « Rumen methanogenesis of dairy cows in response to increasing levels of dietary extruded linseeds », 2nd International Symposium on Energy and Protein Metabolism and Nutrition, 9-13 September 2007, Vichy, France, pp. 609-610.

Cf. également « Methane output and diet digestibility in response to feeding dairy cows with crude linseed, extruded linseed or linseed oil », Journal of Animal Science, doi:10.2527/jas/2007-0774.

La demande internationale de brevet n° WO 03/094628 divulgue l'utilisation d'eugénol pour réduire la production de méthane (cf. en particulier page 2, dernier paragraphe).

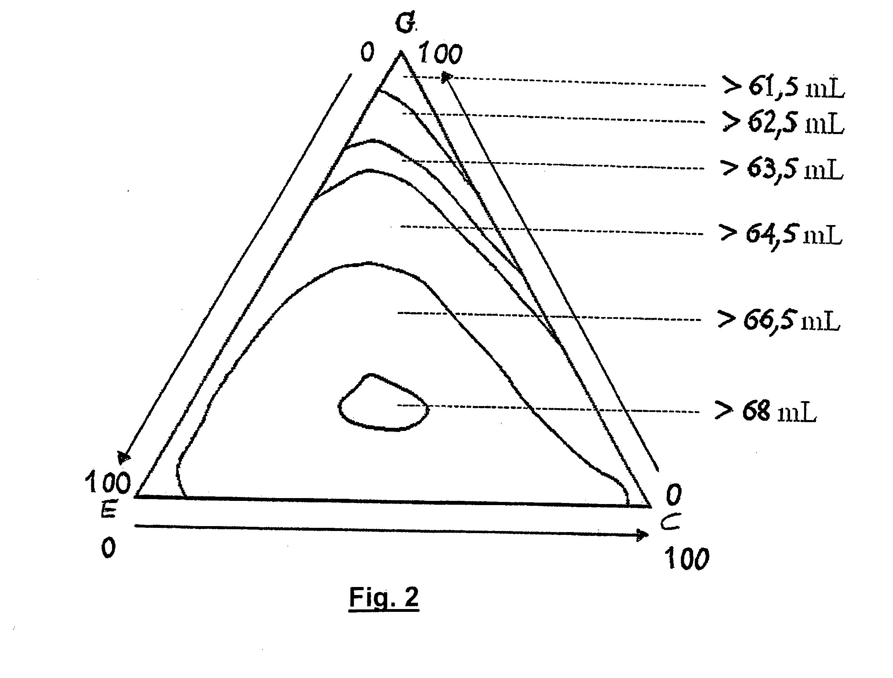

L'article de Macheboeuf & autres, paru dans la revue Animal Feed Science and Technology, vol. 145, n°1 à 4, août 2008, pages 335 à 350 (XP002575075), fait état d'une réduction de la production de méthane due au cinnamaldéhyde (voir notamment Fig. 2, bas de la page 342).

La demande internationale de brevet n° WO 2008/0377827 enseigne que l'utilisation de dérivés d'alliacées, en particulier de PTS/PTSO, entraîne une diminution de l'émission de gaz de fermentation, notamment le méthanol, chez les ruminants (cf. page 5, 3ème paragraphe).

Pour réduire les émissions de méthane dues aux animaux et en partie aux bovins, il serait souhaitable de disposer d'une solution simple, peu onéreuse et que l'on puisse mettre en oeuvre facilement. Une telle solution devrait en outre pouvoir être employée aussi bien dans les pays développés que dans des pays pauvres dont certains, comme l'Inde, le Brésil ou l'Argentine, ont un cheptel extrêmement important et jouent par conséquent un rôle non négligeable dans la production de gaz à effet de serre.

## Exposé sommaire de l'invention

Les inventeurs de la présente invention ont mis au point un additif alimentaire qui a ceci de particulier qu'il comprend de l'eugénol, du cinnamaldéhyde et un extrait d'une plante appartenant à la famille des alliacées, ces ingrédients étant présents dans des proportions spécifiques.

Les inventeurs ont constaté que l'ajout, dans la ration alimentaire d'un ruminant, d'un tel additif, conduisait à une importante réduction de la production de méthane par ce ruminant, sans affecter notablement la production d'acides gras volatils dans le rumen, ces acides étant importants car ils servent de source d'énergie au métabolisme de l'animal.

Quant à la production de méthane, elle peut, dans certains cas, subir une réduction allant jusqu'à 25%.

D'autres caractéristiques et avantages de l'invention vont maintenant être décrits en détail dans l'exposé qui suit et qui est illustré par les figures annexées qui représentent :

- figure 1 : un graphique ternaire montrant les courbes de production de méthane en fonction des concentrations de l'additif alimentaire en eugénol, cinnamaldéhyde et extrait de plante appartenant au genre *Allium* ;
- figure 2 : un graphique ternaire montrant les courbes de production d'acides gras volatils en fonction des concentrations de l'additif alimentaire en eugénol, cinnamaldéhyde et extrait de plante appartenant au genre *Allium* ;
- figure 3 : un diagramme indiquant la production moyenne de méthane par vache et par jour, en grammes, pour chaque traitement testé ;
- figure 4 : un diagramme présentant la concentration en millimoles/l du liquide ruminal en acides gras volatils, pour chaque traitement testé ; et
- Figures 5 à 7 : diagrammes indiquant les pourcentages en acétate, propionate et butyrate parmi les acides gras volatils, pour chaque traitement testé.

**Exposé détaillé de l'invention**

L'eugénol utilisé dans l'additif alimentaire selon l'invention est le composé bien connu appelé 4- allyl- 2- méthoxyphénol, de formule brute $C_{10}H_{12}O_2$.

Le cinnamaldéhyde (ou aldéhyde cinnamique) est également bien connu. Il s'agit du 3- phénylpropénal (trans-cinnamaldéhyde) de formule brute $C_9H_8O$.

Selon l'invention, l'additif alimentaire comprend au moins un extrait de plante appartenant à la famille des alliacées (selon la classification phylogénétique APG) et en particulier au genre *Allium,* qui est un membre de cette famille, la plante étant choisie parmi le poireau (*Allium ampeloprasum*), l'oignon *(Allium cepa L.),* l'ail cultivé *(Allium sativum L.*), l'échalote *(Allium ascalonicum),* la ciboule *(Allium fistulosum L.*) et la ciboulette *(Allium schoenoprasum L.).*

Selon l'invention, on utilise de préférence un extrait d'ail cultivé *(Allium Sativum* L.). Il s'agit en général d'un extrait de bulbe d'ail.

Cet extrait d'ail peut contenir un thiosulfinate de dialkyle et/ou au moins un thiosulfonate de dialkyle.

Ces composés répondent à la formule F suivante :

$$R - SO_a - S - R'$$

dans laquelle :

R et R', identiques ou différents, représentent chacun un groupement alkyle ; et
a vaut 1 ou 2.

Les groupements alkyle R et R' comprennent de préférence 1 à 5 atomes de carbone.

De plus, on utilise plus particulièrement comme groupements R et R', des groupements propyle, généralement n-propyle.

Au sein d'un même composé de formule F, les groupements R et R' sont de préférence identiques.

Pour un thiosulfinate de dialkyle, dans la formule F, a vaut 1.

Pour un thiosulfonate de dialkyle, a vaut 2.

Comme composé (s) de formule F, il est avantageux d'utiliser un thiosulfinate de di (n- propyle) (appelé par la suite PTS) et/ou un thiosulfonate de di (n- propyle) (appelé par la suite PTSO) .

Le PTSO peut être obtenu par décomposition (ou oxydation) du PTS.

L'obtention du PTS par extraction et du PTSO est notamment décrite dans la demande de brevet EP-A1-1 721 534, de la page 15, ligne 34, à la page 16, ligne 26.

Les thiosulfinates peuvent également être obtenus selon le procédé décrit dans la demande de brevet FR-A-2 813 884.

Cependant, le PTS et le PTSO ne sont pas nécessairement obtenus à partir d'alliacées. Ils peuvent bien entendu également être des produits de synthèse.

L'invention concerne donc également un additif alimentaire comprenant :

- 30 à 45% d'eugénol,
- 30 à 45% de cinnamaldéhyde et
- 10 à 40% d'au moins un composé F ;
- le complément à 100% pouvant, le cas échéant, être constitué d'autres composés, en particulier, des organo-soufrés.

Bien entendu, l'additif alimentaire selon l'invention peut comprendre des mélanges en toutes proportions de

- au moins deux thiosulfinates de dialkyle ;
- au moins deux thiosulfonates de dialkyle ;
- au moins un thiosulfinate de dialkyle et au moins un thiosulfonate de dialkyle.

Selon un autre mode de réalisation de l'invention, le ou les composés de formule F peuvent être associés à au moins un autre composé, de préférence un composé soufré, en particulier un composé soufré provenant d'une plante appartenant au genre *Allium.* Cet autre composé soufré peut être par exemple, l'allicine, un sulfure ou un polysulfure, en particulier, un disulfure comme le disulfure d'allyle.

Ces composés peuvent être sous la forme d'une solution dans un solvant tel que la glycérine, le propylène glycol, ou sous la forme d'une émulsion aqueuse employant des polysorbates comme émulsifiants.

L'additif alimentaire selon l'invention peut en outre contenir d'autres composés bien connus de l'homme du métier, tels que des huiles végétales hydrogénées, de la maltodextrine D.E 6, 9, 18, 5, de la lécithine de soja, de la gélatine, des cyclodextrines, de la pectine, de la gomme guar, du dextrose, du maltose, de la gomme arabique, du sepifilm , de l'hydroxypropylmethyl- cellulose, de la méthyl- cellulose, de l'éthyl- cellulose, de l'éthyl- methyl- cellulose, des extraits de quillaja, du monolaurate de sorbitan polyoxyéthyléné (20), du monooléate de sorbitan poyoxyéthyléné (20), du monostéarate de sorbitan poyoxyéthyléné (20), du monopalmitate de sorbitan poyoxyéthyléné (20), du monolaurate de sorbitan, du monoléate de sorbitan, du monostéarate de sorbitan, des mono- et diglycérides d'acides gras comestibles estérifiés avec les acides suivants : acétique, lactique, citrique, tartarique et mono/di- acétyltartarique.

Selon un mode de réalisation avantageux de l'invention, l'additif alimentaire est constitué :

- 30 à 45% d'eugénol,
- 30 à 45% de cinnamaldéhyde et
- 10 à 40% d'extrait d'ail ;
- la somme de des pourcentages étant de 100%.

Il est en outre préférable que la teneur en extrait d'ail soit comprise entre 15 et 35%, tout spécialement entre 24 et 26%.

L'additif alimentaire selon l'invention peut être préparé en mélangeant, dans un ordre quelconque, l'eugénol, le cinnamaldéhyde, l'extrait d'ail et les éventuels autres ingrédients dans les proportions souhaitées, jusqu'à obtention d'un mélange homogène.

On peut utiliser les techniques habituelles de galénique, telles que le refroidissement par atomisation (« spray cooling »), la coacervation, la gélatinisation, le grelonage (« prilling ») et la pulvérisation, mise en suspension et granulation dans un lit d'air fluidisé.

L'additif alimentaire selon l'invention se présente globalement sous la forme d'une poudre constituée en général de particules ayant une dimension pouvant aller de 90 $\mu$m (microns) à 1000 $\mu$m, en particulier entre 200 $\mu$m et 500 $\mu$m.

Ces particules peuvent éventuellement être totalement enrobées par une couche extérieure d'enrobage destinée à masquer le goût de l'ail et/ou favoriser la prise alimentaire en stimulant l'appétit de l'animal. Un tel enrobage peut être celui décrit dans la demande de brevet français déposée sous le n° FR0804617.

Lors de son utilisation, l'additif alimentaire selon l'invention peut être ajouté à un concentré alimentaire pour animaux. Un tel concentré alimentaire est bien connu de l'homme du métier et peut comprendre des coques de soja, des grains de maïs, des tourteaux, des sous-produits de l'éthanolerie du blé ou du maïs, etc.

Pour l'alimentation des bovins, caprins, ovins, l'additif alimentaire selon l'invention peut être ajouté au fourrage tel que l'herbe, la luzerne, le foin, etc.

L'additif alimentaire selon l'invention peut également servir à préparer un aliment pour animaux comprenant un concentré alimentaire pour animaux, du fourrage et l'additif en question.

L'additif alimentaire selon l'invention peut être dosé de telle sorte que l'animal en ingère 100 mg à 1000 mg par jour. De préférence, on le dose à 500 mg/jour/animal.

L'additif alimentaire selon l'invention est particulièrement approprié pour les ruminants, en particulier les bovins.

## **Exemples**

### a) *Tests in vitro*

On prélève du liquide ruminal sur une vache.

On prépare ensuite une solution 1 : 1 (en volume) de liquide ruminal et d'une solution tampon.

On introduit 50 ml de la solution dans un tube en polypropylène.

On prépare une ration (en base matière sèche) constituée de foin de luzerne (34,7%), foin d'ivraie (« ryegrass » en anglais) (14,8%), grain d'orge broyé (11,4%), grain de maïs broyé (11,4%), tourteau de soja (1,6%), graine de coton (7,9%), gluten de maïs (11,6%), mélasse (3,2%), sels de calcium d'acides gras (1,3%), et un prémélange minéral et vitaminique (2,1%).

On prépare un concentré alimentaire constitué de maïs, de tourteau de soja, de blé et éventuellement d'autres matières premières entrant habituellement dans la composition de concentrés alimentaires.

On introduit 300 mg de ration, 200 mg et de concentré alimentaire (ce qui équivaut à un mélange 60/40 de ration et d'aliment concentré) ainsi que 6,25 mg d'additif alimentaire dans le tube de polypropylène, soit 250 mg d'additif pour 1 l de mélange 1/1 de liquide ruminal/solution tampon.

Plusieurs additifs alimentaires selon l'invention A1 à A4 et d'autres servant d'éléments de comparaison ET1 à ET6 sont testées. Leurs compositions et quantités rapportées à 1 litre du mélange liquide ruminal/solution tampon sont indiquées dans le tableau suivante :

| Additif | Eugénol (mg) | Cinnamaldéhyde (mg) | Extrait d'ail (mg) |
|---------|--------------|---------------------|---------------------|
| ET1 | 125 | 125 | 0 |
| ET2 | 0 | 250 | 0 |
| ET3 | 250 | 0 | 0 |
| ET4 | 0 | 0 | 250 |
| ET5 | 0 | 125 | 125 |
| ET6 | 125 | 0 | 125 |
| A1 | 41,7 | 41,7 | 166,7 |
| A2 | 41,7 | 166,7 | 41,7 |
| A3 | 166,7 | 41,7 | 41,7 |
| A4 | 83,3 | 83,3 | 83,3 |

L'extrait d'ail utilisé ici est le liquide dénommé « GARLICON 40% Liquid Feed Grade » commercialisé par la société espagnole Prebia Feed Extracts S.L. de Talavera de la Reina, Toledo, qui contient 400 ppm de composés organosulfurés caractéristiques de l'ail/oignon et 6,7% en poids de PTS et 34,3% en poids de PTSO.

Deux témoins sont également testés. Le premier T1 est une ration ne contenant que du fourrage.

Le second T2 est une solution aqueuse d'un aliment fournissant à la solution une concentration de 500 mg de monensine (composé actif produit à partir du mycélium de *Streptomyces cinnamonensis)* par litre de mélange liquide ruminal/solution tampon.

On maintient le tube bouché à 39°C pendant 24h, de façon à ce que l'incubation se produise.

On prélève des échantillons gazeux au-dessus du liquide.

On détermine les concentrations en acides gras volatils (AGV : acétate, propionate, butyrate, valérate) et en méthane.

Chaque essai est effectué deux fois et répété au cours de 2 périodes consécutives.

Les résultats des mesures des gaz sont indiqués dans le tableau suivant.

Le rapport intitulé C2 / C3 est le ratio entre l'acétate (C2) et le propionate (C3).

| Additif alimentaire | Méthane ml | AGV total ml (*) | % propionate | % acétate | % butyrate | C2/C3 |
|---------------------|------------|------------------|--------------|-----------|------------|-------|
| ET1 | 24, 9206 | 66,33 | 54,59 | 76, 84 | 6,6 | 5,58 |
| ET2 | 19,4051 | 66,51 | 54, 68 | 76,94 | 6,53 | 5,6 |
| ET3 | 18,3533 | 64, 94 | 50,26 | 76,55 | 6,64 | 5,55 |
| ET4 | 23,2851 | 61,9 | 50,78 | 75,59 | 7,01 | 5,21 |
| ET5 | 23,1945 | 63,44 | 51,02 | 75, 97 | 6,99 | 5,37 |
| ET6 | 23,3753 | 64,65 | 51,95 | 76,21 | 6,79 | 5,41 |
| A1 | 18,4931 | 63,36 | 49,47 | 75,83 | 6,97 | 5,33 |
| A2 | 18,4578 | 67,16 | 51,98 | 76,44 | 6,8 | 5,5 |
| A3 | 21,1599 | 69,47 | 50,65 | 76,28 | 6,75 | 5,47 |

(suite)

| Additif alimentaire | Méthane ml | AGV total ml (*) | % propionate | % acétate | % butyrate | C2/C3 |
|---|---|---|---|---|---|---|
| A4 | 17,9579 | 67,15 | 50,29 | 76,02 | 6,93 | 5,41 |
| (*) : outre le propionate, l'acétate et le butyrate, d'autres composés comme le valérate, l'isovalérate ou l'isobutyrate assurent le complément à 100%. | | | | | | |

Les analyses statistiques des résultats effectuées avec le logiciel SAS permettent de définir l'équation suivante de régression liant la concentration de méthane Y (en ml) aux concentrations des 3 constituants de l'additif alimentaire :

$$Y = 0,078\ E + 0,0077\ C + 0,096\ G + 0,000356\ x\ E\ x\ C - 0,000012\ x\ E\ x\ C\ x\ G$$

avec :

E = concentration en eugénol (en %)
C = concentration en cinnamaldéhyde (en %)
G = concentration en extrait d'ail (en %)

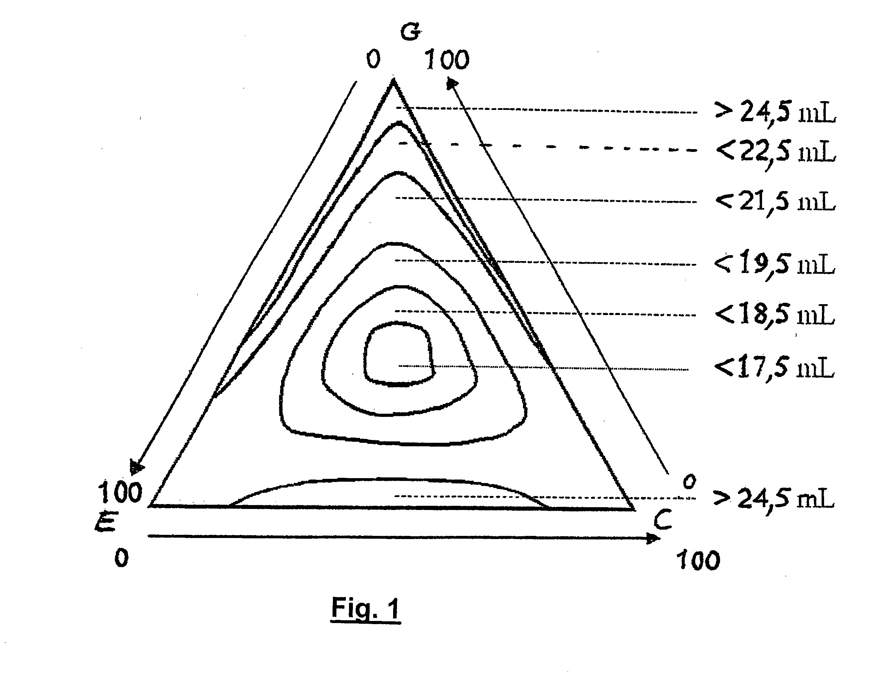

La production de méthane peut être visualisée sur la figure 1.

La figure 2 permet de visualiser la production d'acides gras volatils en fonction des concentrations des 3 constituants E, C et G de l'additif alimentaire.

On constate que la production d'acides gras volatils est plus faible lorsque la teneur en extrait d'alliacée G augmente dans l'additif alimentaire.

Des mesures plus poussées montrent en outre que

- la proportion molaire d'acétate diminue sous l'effet de la combinaison de C et de G et de la combinaison de E, C et G ;
- la proportion molaire de butyrate augmente sous l'effet de la combinaison de C et de G et de la combinaison de E, C et G ;
- la proportion molaire de valérate diminue sous l'effet de la combinaison de C et de G et augmente sous l'effet de la combinaison de C et de G et de la combinaison de E, C et G ; et
- la proportion molaire de propionate augmente sous l'effet de C, de E et de G seuls, et diminue avec la combinaison de C et de G.

On constate que la zone optimale, c'est-à-dire conduisant à la réduction maximale de la production de méthane et au meilleur maintien de la production d'acides gras volatils correspond aux proportions suivantes des constitutants, E, C et G dans l'additif alimentaire :

- 30 à 45% d'eugénol,
- 45 à 30% de cinnamaldéhyde,
- environ 25% d'extrait d'ail.

En effet, un additif alimentaire selon l'invention ayant cette composition conduit à une réduction de la production de méthane chez le ruminant de 15 à 25% par rapport à un additif alimentaire similaire dépourvu d'extrait d'ail.

Ainsi, -les résultats qui précèdent démontrent bien que les constituants eugénol, cinnamaldéhyde et l'extrait d'alliacée agissent de manière synergique et réduisent notablement la production de méthane, en particulier chez un ruminant comme la vache.

Par conséquent, pour réduire les émissions de méthane dans l'atmosphère terrestre et donc contribuer à limiter le réchauffement climatique, on peut procéder comme suit :

- on prépare un additif alimentaire selon l'invention ;

- on ajoute cet additif alimentaire aux rations alimentaires de ruminants ; et

- on donne les rations alimentaires obtenues à manger aux ruminants.

**b) Test in vivo**

On a procédé à des tests in vivo pour confirmer les résultats obtenus précédemment *in vivo.*

i) Animaux testés

Il s'agissait de vaches Holstein.

ii) Régime alimentaire

Leur ration journalière avait la composition suivante indiquée dans le tableau suivant :

| Ingrédients | % massique |
|---|---|
| Fourrage de maïs | 25 |
| Foin de luzerne | 29 |
| Foin de luzerne haché | 11 |
| Granulés concentrés | 35 |
| TOTAL | 100 |

A la ration journalière des vaches on a ajouté les additifs alimentaires suivantes :

| Essai | Additif ajouté | Quantité ajoutée |
|---|---|---|
| 1 | Aucun | - |
| 2 | T2 (voir exemple *in vitro*) | 300 mg/jour |
| 3 | mélange ET7 selon l'invention | 150 mg/jour |
| 4 | mélange ET7 selon l'invention | 300 mg/jour |
| 5 | mélange ET7 selon l'invention | 450 mg/jour |
| 6 | A8 : 50% en poids de mélange ET7 selon l'invention + 50% en poids de T2 | 600 mg/jour |

Le mélange ET7 selon l'invention est constitué, en pourcentages massiques, de 33% en poids d'eugénol, de 43% de cinnamaldéhyde et de 24% d'extrait d'ail dénommé « GARLICON 40% Liquid Feed Grade » (voir exemple *in vitro*).

iii) Appareillage et méthode expérimentale

Chaque vache était équipée d'un petit tuyau fixé au niveau du mufle, entre les narines.
On a effectué, sur 6 période de 25 jours chacune, des analyses des gaz prélevés en continu au moyen des tuyaux.
Parallèlement, des prélèvements de liquide ruminal ont été réalisés régulièrement pour mesurer la concentration totale en acides gras volatils et les pourcentages d'acétate, de propionate et de butyrate présents parmi ces acides gras volatils.

iv) Résultats

1) Production de méthane

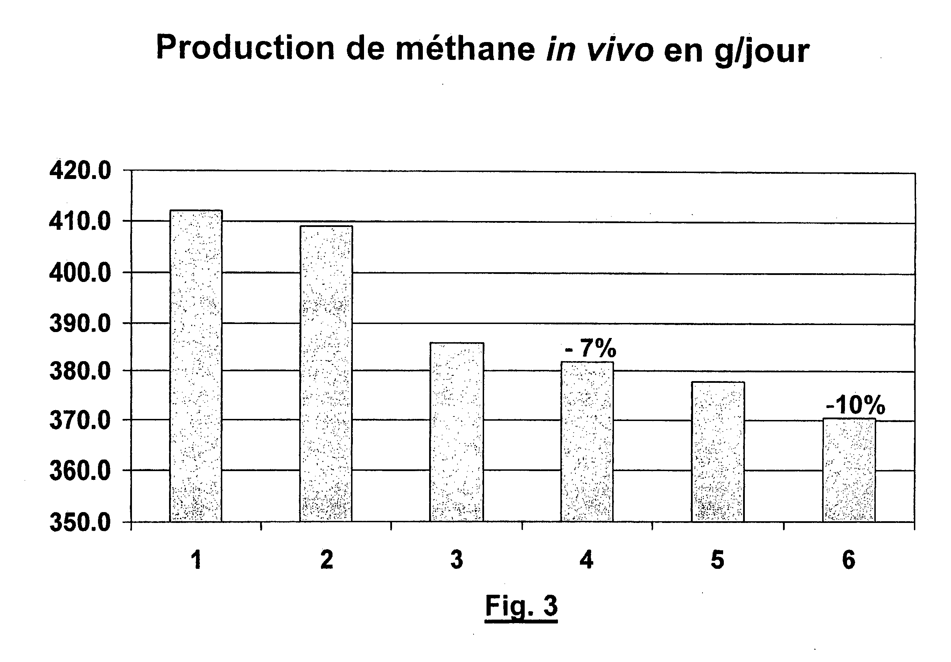

La figure 3 est un diagramme indiquant la production moyenne de méthane par vache et par jour, en grammes.
On constate que plus la ration journalière contient de mélange selon l'invention, plus la réduction de la production de méthane est importante.
Un effet de synergie semble se produit pour l'essai 6, c'est-à-dire lorsqu'on associe le mélange ET7 selon l'invention avec la solution de monoensine.

2) Teneur totale en acides gras volatils

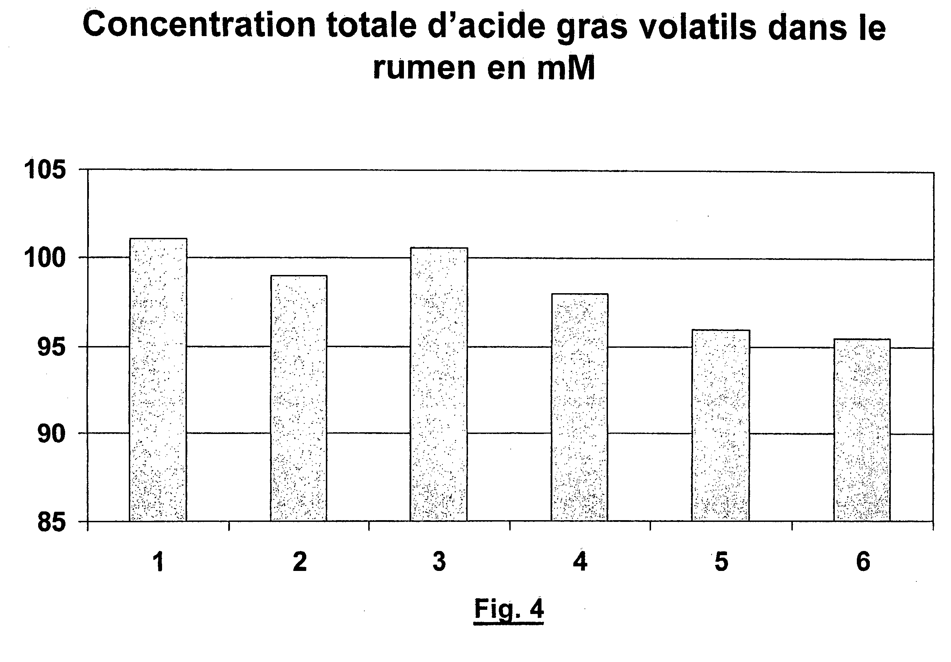

La figure 4 est un diagramme présentant la concentration en millimoles/l du liquide ruminal en acides gras volatils.

On constate que la valeur obtenue pour l'essai 3 est proche de celle de l'essai 1, ce qui signifie que malgré l'importante réduction de la production de méthane (cf. figure 3) obtenue, la teneur en acides gras volatils est comparable à celle de l'essai 1 (témoin).

Dans l'essai 4, la teneur en acides gras volatils n'est que légèrement inférieure à celle de l'essai 1.

3) Pourcentages d'acétate, de propionate et de butyrate

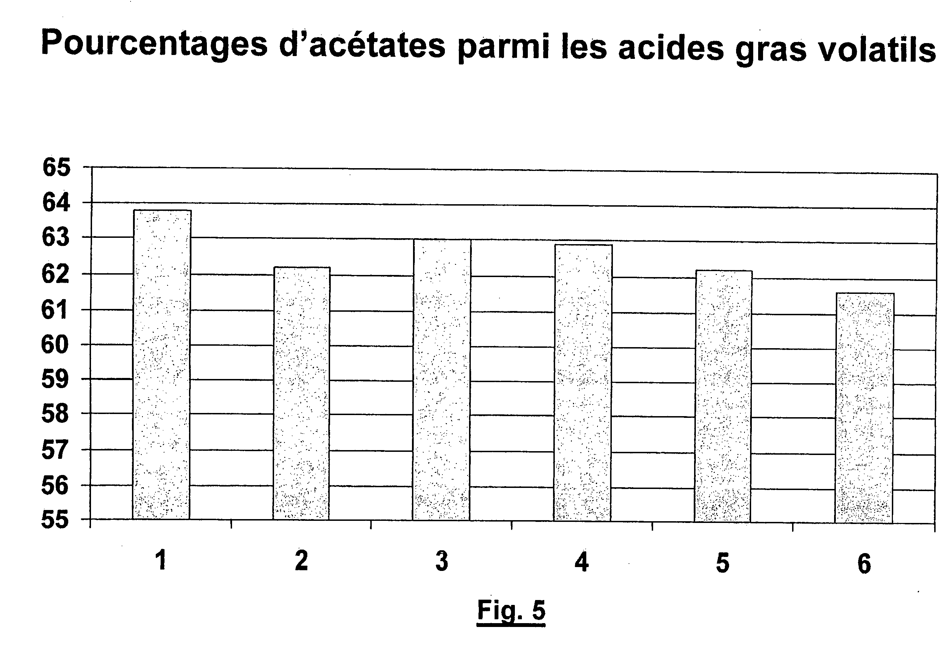

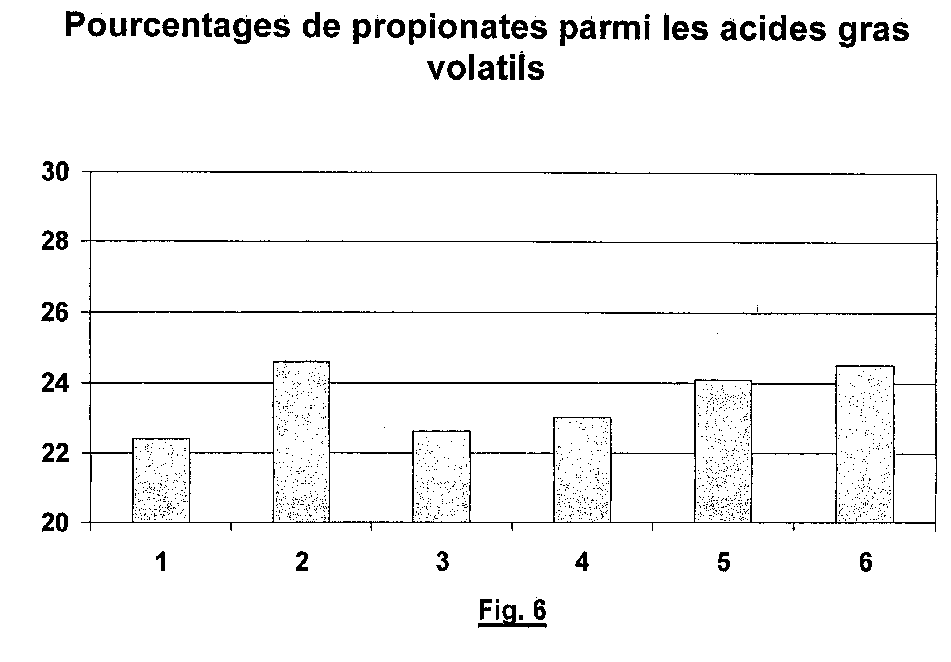

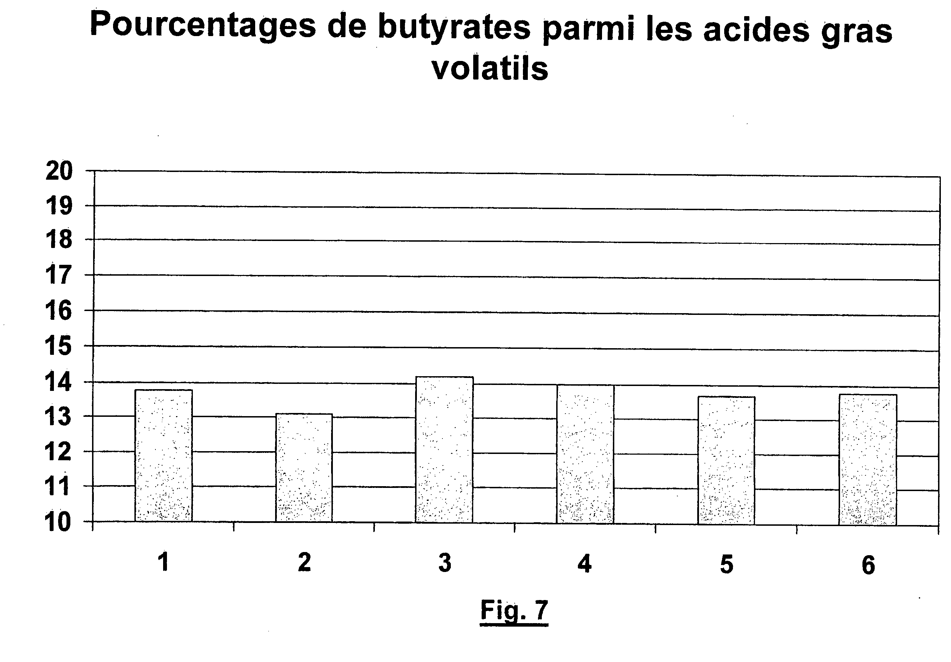

Les pourcentages d'acétate, propionate et butyrate sont indiqués respectivement sur les figures 5, 6 et 7, en fonction des essais.

On observe une absence de dégradation des paramètres de la fermentation ruminale, voire une amélioration de ces derniers : une réduction ou une constance de la teneur en acétate et une constance ou augmentation de la teneur en propionate et en butyrate.

v) Conclusion

Les expériences menées *in vivo* confirment que l'ingestion de l'additif selon l'invention entraîne une diminution de la production de méthane tout en n'affectant pratiquement pas la production d'acides gras volatils.

**Revendications**

1.  Additif alimentaire comprenant :

    - 30 à 45% d'eugénol,
    - 30 à 45% de cinnamaldéhyde,
    - 10 à 40% d'extrait **d'une plante choisie parmi le poireau (*Allium ampeloprasum*), l'oignon (*Allium cepa L.*), l'ail cultivé (*Allium sativum L.*), l'échalote (*Allium ascalonicum*), la ciboule (*Allium fistulosum L.*) et la ciboulette *(Allium schoenoprasum L.),***
    - le complément à 100% pouvant, le cas échéant, être constitué d'autres composés, en particulier, des organo-soufrés.

2.  Additif alimentaire selon la revendication 1, dans lequel la plante est l'ail cultivé *(Allium sativum L.).*

3.  Additif alimentaire selon la revendication 1 ou 2, comprenant 15 à 35% d'extrait d'ail.

4.  Additif alimentaire selon la revendication 3, comprenant 24 à 26 % d'extrait d'ail.

5.  Additif alimentaire selon l'une des revendications 1 à 4, dans lequel l'extrait de plante comprend au moins un composé répondant à la formule F suivante :

    $$R - SO_a - S - R'$$

    dans laquelle :

    R et R', identiques ou différents, représentent chacun un groupement alkyle ; et
    a vaut 1 ou 2.

6.  Additif alimentaire comprenant :

    - 30 à 45% d'eugénol,
    - 30 à 45% de cinnamaldéhyde et
    - 10 à 40% d'au moins un composé répondant à la formule F suivante :

    $$R - SO_a - S - R'$$

dans laquelle :

R et R', identiques ou différents, représentent chacun un groupement alkyle et a vaut 1 ou 2 ;

- le complément à 100% pouvant, le cas échéant, être constitué d'autres composés, en particulier, des organo-soufrés.

**7.** Additif alimentaire selon la revendication 5 ou 6, dans lequel, dans la formule F, les groupements R et R' sont des groupements alkyle comprenant de 1 à 5 atomes de carbone.

**8.** Additif alimentaire selon la revendication 7, dans lequel, dans la formule F, les groupements R et R' sont des groupements propyle.

**9.** Additif alimentaire selon l'une des revendications 5 à 8, dans lequel les groupements R et R' sont identiques.

**10.** Additif alimentaire selon l'une des revendications 5 à 9, dans lequel, dans la formule F, a vaut 1.

**11.** Additif alimentaire selon la revendication 5 ou 6, dans lequel dans le composé de formule F est le thiosulfinate de dipropyle.

**12.** Additif alimentaire selon l'une des revendications 5 à 9, dans lequel, dans la formule F, a vaut 2.

**13.** Additif alimentaire selon la revendication 5 ou 6, dans lequel dans le composé de formule F est le thiosulfonate de dipropyle.

**14.** Additif alimentaire selon la revendication 5 ou 6, comprenant un mélange de thiosulfinate de dipropyle et de thiosulfonate de dipropyle.

**15.** Utilisation d'un additif alimentaire selon l'une des revendications 1 à 14 pour réduire la production de méthane chez un ruminant.

**16.** Utilisation d'un additif alimentaire selon l'une des revendications 1 à 14 en combinaison avec du monensine pour réduire la production de méthane chez un ruminant.

**17.** Utilisation selon la revendication 15 ou 16, le ruminant étant une vache.

**18.** Procédé de réduction des émissions de méthane dans l'atmosphère terrestre, comprenant les étapes suivantes :

- on ajoute un additif alimentaire selon l'une des revendications 1 à 14 à la ration alimentaire d'un ruminant ; et
- on donne la ration alimentaire obtenue à manger au ruminant.

**Patentansprüche**

**1.** Lebensmittelzusatzstoff, enthaltend:

- 30 bis 45 % Eugenol,
- 30 bis 45 % Zimtaldehyd,
- 10 bis 40 % eines Pflanzenextrakts, ausgewählt aus Porree (Allium ampeloprasum), Zwiebel (Allium cepa L.), Knoblauch (Allium sativum L.), Schalotte (Allium ascalonicum), Lauchzwiebel (Allium fistulosum L.) und Schnittlauch (Allium schoenoprasum L.),
- wobei die Vervollständigung auf 100 % gegebenenfalls durch weitere Verbindungen gebildet sein kann, insbesondere Organoschwefelverbindungen.

**2.** Lebensmittelzusatzstoff nach Anspruch 1, bei dem die Pflanze Knoblauch (Allium sativum L.) ist.

**3.** Lebensmittelzusatzstoff nach Anspruch 1 oder 2, der 15 bis 35 % Knoblauchextrakt aufweist.

4. Lebensmittelzusatzstoff nach Anspruch 3, der 24 bis 26 % Knoblauchextrakt aufweist.

5. Lebensmittelzusatzstoff nach einem der Ansprüche 1 bis 4, bei dem der Pflanzenextrakt zumindest eine Verbindung der nachfolgenden Formel F enthält:

$$R- SOa- S- R'$$

bei welcher:

R und R' gleich oder verschieden sind und jeweils eine Alkylgruppe darstellen; und a den Wert 1 oder 2 hat.

6. Lebensmittelzusatzstoff, enthaltend:

- 30 bis 45 % Eugenol,
- 30 bis 45 % Zimtaldehyd,
- 10 bis 40 % von zumindest einer Verbindung der nachfolgenden Formel F:

$$R- SOa- S- R'$$

bei welcher:

R und R' gleich oder verschieden sind und jeweils eine Alkylgruppe darstellen und a den Wert 1 oder 2 hat;

- wobei die Vervollständigung auf 100 % gegebenenfalls durch weitere Verbindungen gebildet sein kann, insbesondere Organoschwefelverbindungen.

7. Lebensmittelzusatzstoff nach Anspruch 5 oder 6, bei dem die Gruppen R und R' der Formel F Alkylgruppen mit 1 bis 5 Kohlenstoffatomen sind.

8. Lebensmittelzusatzstoff nach Anspruch 7, bei dem die Gruppen R und R' der Formel F Propylgruppen sind.

9. Lebensmittelzusatzstoff nach einem der Ansprüche 5 bis 8, bei dem die Gruppen R und R' identisch sind.

10. Lebensmittelzusatzstoff nach einem der Ansprüche 5 bis 9, bei dem a in der Formel F den Wert 1 hat.

11. Lebensmittelzusatzstoff nach Anspruch 5 oder 6, bei dem die Verbindung der Formel F Dipropylthiosulfinat ist.

12. Lebensmittelzusatzstoff nach einem der Ansprüche 5 bis 9, bei dem a in der Formel F den Wert 2 hat.

13. Lebensmittelzusatzstoff nach Anspruch 5 oder 6, bei dem die Verbindung der Formel F Dipropylthiosulfonat ist.

14. Lebensmittelzusatzstoff nach Anspruch 5 oder 6, der eine Mischung von Dipropylthiosulfinat und Dipropylthiosulfonat enthält.

15. Verwendung eines Lebensmittelzusatzstoffes nach einem der Ansprüche 1 bis 14 zur Verringerung der Methanbildung bei einem Wiederkäuer.

16. Verwendung eines Lebensmittelzusatzstoffes nach einem der Ansprüche 1 bis 14 in Kombination mit Monensin zur Verringerung der Methanbildung bei einem Wiederkäuer.

17. Verwendung nach Anspruch 15 oder 16, bei welcher der Wiederkäuer eine Kuh ist.

18. Verfahren zur Verringerung der Methanemission in der Erdatmosphäre, das die folgenden Schritte umfaßt:

- ein Lebensmittelzusatzstoff nach einem der Ansprüche 1 bis 14 wird der Nahrungsration eines Wiederkäuers hinzugefügt; und
- die erhaltene Nahrungsration wird einem Wiederkäuer zum Fressen gegeben.

**Claims**

1.  A food additive comprising:

    - 30 to 45% of eugenol,
    - 30 to 45% of cinnamaldehyde, and
    - 10 to 40% of extract of a plant chosen from leek (*Allium ampeloprasum*), onion (*Allium cepa* L.), cultivated garlic *(Allium sativum L.),* shallot (*Allium ascalonicum*)*,* Welsh onion (*Allium fistulosum* L.) and chives *(Allium schoenoprasum L.),*
    - the remainder up to 100% optionally comprising other compounds, in particular organosulfur compounds.

2.  The food additive as claimed in claim 1, in which the plant is cultivated garlic *(Allium sativum L.).*

3.  The food additive as claimed in claim 2, comprising 15 to 35% of garlic extract.

4.  The food additive as claimed in claim 3, comprising 24 to 26% of garlic extract.

5.  The food additive as claimed in one of claims 1 to 4, in which the plant extract comprises at least one compound corresponding to the following formula F:

    $$R\text{-}SO_a\text{-}S\text{-}R'$$

    in which:

    R and R', which are identical or different, each represent an alkyl group; and
    a is 1 or 2.

6.  A food additive comprising:

    - 30 to 45% of eugenol,
    - 30 to 45% of cinnamaldehyde, and
    - 10 to 40% of at least one compound corresponding to the following formula F:

    $$R\text{-}SO_a\text{-}S\text{-}R'$$

    in which:

    R and R', which are identical or different, each represent an alkyl group and a is 1 or 2;

    - the remainder up to 100% optionally comprising other compounds, in particular organosulfur compounds.

7.  The food additive as claimed in claim 5 or 6, in which, in formula F, the groups R and R' are alkyl groups comprising from 1 to 5 carbon atoms.

8.  The food additive as claimed in claim 7, in which, in formula F, the R and R' groups are propyl groups.

9.  The food additive as claimed in one of claims 5 to 8, in which the R and R' groups are identical.

10. The food additive as claimed in one of claims 5 to 9, in which, in formula F, a is 1.

11. The food additive as claimed in claim 5 or 6, in which the compound of formula F is dipropyl thiosulfinate.

12. The food additive as claimed in one of claims 5 to 9, in which, in formula F, a is 2.

13. The food additive as claimed in claim 5 or 6, in which the compound of formula F is dipropyl thiosulfonate.

14. The food additive as claimed in claim 5 or 6, comprising a mixture of dipropyl thiosulfinate and dipropyl thiosulfonate.

**15.** The use of the food additive as claimed in one of claims 1 to 14, for reducing the production of methane in a ruminant.

**16.** The use of the food additive as claimed in one of claims 1 to 14, in combination with monoensin, for reducing the production of methane in a ruminant.

**17.** The use as claimed in claim 15 or 16, the ruminant being a cow.

**18.** A process for reducing methane emissions into the earth's atmosphere, comprising the following steps:

    - a food additive as claimed in one of claims 1 to 14 is added to the feed ration for a ruminant; and
    - the feed ration obtained is fed to the ruminant.

**Fig. 1**

EP 2 453 760 B1

Fig. 2

Production de méthane *in vivo* en g/jour

Fig. 3

# Concentration totale d'acide gras volatils dans le rumen en mM

EP 2 453 760 B1

Fig. 4

# Pourcentages d'acétates parmi les acides gras volatils

EP 2 453 760 B1

Fig. 5

# Pourcentages de propionates parmi les acides gras volatils

<u>Fig. 6</u>

# Pourcentages de butyrates parmi les acides gras volatils

Fig. 7

## RÉFÉRENCES CITÉES DANS LA DESCRIPTION

**Documents brevets cités dans la description**

- WO 03094628 A
- WO 20080377827 A
- EP 1721534 A1
- FR 2813884 A
- FR 0804617

**Littérature non-brevet citée dans la description**

- Rumen methanogenesis of dairy cows in response to increasing levels of dietary extruded linseeds. *2nd International Symposium on Energy and Protein Metabolism and Nutrition,* 09 Septembre 2007, 609-610
- Methane output and diet digestibility in response to feeding dairy cows with crude linseed, extruded linseed or linseed oil. *Journal of Animal Science*
- **MACHEBOEUF.** *Animal Feed Science and Technology,* 04 Août 2008, vol. 145, 335-350